# EUROPÄISCHE PATENTSCHRIFT

(11) **EP 1 278 642 B1**
(45) Veröffentlichungstag und Bekanntmachung des Hinweises auf die Patenterteilung: **26.11.2003**
(21) Anmeldenummer: 01936249.0
(22) Anmeldetag: 19.04.2001
(51) Int. Cl.: B41M 3/14, G07D 7/00, B41M 5/30, B42D 15/10, B42D 15/00

(54) **AUFZEICHNUNGSMATERIALIEN MIT TEMPORÄR WIRKENDEM SICHERHEITSMERKMAL.**
RECORDING MATERIALS WITH TEMPORARILY EFFECTIVE SECURITY FEATURE.
MATIERES D'INSCRIPTION A CARACTERISTIQUE DE SECURITE A EFFET TEMPORAIRE.

(30) Priorität: 28.04.2000 DE 10020873
(43) Veröffentlichungstag der Anmeldung: 29.01.2003
(73) Patentinhaber: Mitsubishi HiTec Paper Flensburg GmbH, 24941 Flensburg (DE)
(72) Erfinder: NEUKIRCH, Matthias, 24943 Flensburg (DE)
(86) Internationale Anmeldenummer: EP0104442
(87) Internationale Veröffentlichungsnummer: WO01083231

(56) Entgegenhaltungen:
- AU-B- 560 131
- DE-C- 874 142
- FR-A- 2 365 656
- PATENT ABSTRACTS OF JAPAN vol. 011, no. 146 (M-587), 13. Mai 1987 (1987-05-13) & JP 61 280986 A (SEIJI KAWASHIMA), 11. Dezember 1986 (1986-12-11)
- PATENT ABSTRACTS OF JAPAN vol. 011, no. 149 (M-588), 15. Mai 1987 (1987-05-15) & JP 61 283593 A (SEIJI KAWASHIMA), 13. Dezember 1986 (1986-12-13)

## Beschreibung

Die Erfindung betrifft Aufzeichnungsmaterialien mit einer auf ihrer Oberfläche zugänglichen Substanz, die mindestens ein substituiertes Phthalid enthält und die bei Kontakt mit einem alkalisch eingestellten und mindestens ein flüchtiges Lösungsmittel enthaltenden Entwicklerreagenz unter Farbbildung reagiert.

Aufzeichnungsmaterialien bestimmen das tägliche Leben in der Gesellschaft und innerhalb des Berufslebens. Für Einsätze beispielsweise als Überweisungsformulare oder Schecks, Diploma, Zertifikate, Beipackzettel für pharmazeutische Produkte, Lotteriescheine, Wertzeichen oder allgemein als Ausdrucke oder Kopien, deren berechtigte Anfertigung durch die Verwendung des für diesen Zweck zugelassenen und charakteristischen Materials nachzuweisen ist, wurden in der Vergangenheit bereits verschiedene Lösungen für Aufzeichnungsmaterialien mit Sicherheitsmerkmalen vorgeschlagen. Solche Sicherheitsmerkmale ermöglichen zum einen den erwünschten Authentizitätsnachweis, oder sie dienen zum anderen der Vermeidung bzw. Erkennung versuchter Fälschungen, womit gleichermaßen die Möglichkeit eines Authentizitätsnachweises aufgebaut wird.

Authentizitätsnachweise für Dokumente in Form passiver Untersuchungen werden beispielsweise ermöglicht durch Wasserzeichen. Genauso sind als authentizitätsnachweisende Sicherheitsmerkmale farbige und unter ultravioletter Bestrahlung fluoresziemde Fasern geeignet, die entweder dem Papierfaserstoff vor der Blattbildung in geringer Menge zugemischt werden, was in der **DE 195 01 289 A 1** für ein wärmeempfindliches Aufzeichnungspapier vorgeschlagen wird, oder die in ebenso geringer Menge der Aufzeichnungsschicht zugegeben werden, was in der **DE 198 38 895 A 1** auch für ein wärmeempfindliches Aufzeichnungspapier vorgeschlagen wird.

Aktive Untersuchungsmethoden zum Zwecke des Authentizitätsnachweises von Dokumenten sehen das Benetzen des zu untersuchenden Dokuments mit einer Tinktur vor, welche mit in das Dokument eingearbeiteten Komponenten visuell nachweisbar chemisch reagiert.

So ist aus dem **DE 296 17 106 U 1** die Verwendung von Farbstoffen bzw. Pigmenten auf Anthrachinonbasis bekannt. Diese der Papiermasse zugegebenen oder auf die Papieroberfläche aufgebrachten Farbstoffe bzw. Pigmente können durch Acetonbehandlung zum Ausbluten gebracht werden, um die Echtheit des Papiers nachzuweisen. Die **EP 0 072 481 B 1** sieht für ein fälschungssicheres Papier eine Beimischung von 2-(4'-Amino-3'-sulfophenyl)-6-methyl-benzthiazol-7-sulfonsäure oder deren Salzen vor, wobei eine Echtheitsprüfung mit verdünnter Kaliumpermanganatlösung vorgesehen ist.

In der **DE 25 18 871 A 1** wird für beschichtete Papiere als Sicherheitsmerkmal offenbart, daß zwei gleichgeartete Substanzen, die wenigstens einen Farbbildner als AzoVerbindung und wenigstens einen Farbstoff oder ein Pigment enthalten, in bzw. auf das Trägerpapier aufgebracht sind. Im Rahmen einer aktiven Untersuchung kann zur Authentizitätsprüfung ein Reagenz auf der Basis organischer Säuren mittels Stempel, Filzstift oder Walzeneinrichtung auf das Papier aufgebracht werden, wobei die Substanz in bzw. auf dem Trägerpapier zusammen mit dem Reagenz in Form von Farbbildung reagiert.

Aus der **DE-C-874 142** ist ein Schriftblatt für eine wahlweise teils sichtbare und teils unsichtbare Beschriftung bekannt. Wird ein mit Säure behandeltes Schriftblatt mit alkalischer Phenolphthaleinlösung beschriftet, ist die Schrift unsichtbar und wird erst bei Behandlung mit Alkalilösung sichtbar. Dieser am Anmeldetag der vorliegenden Anmeldung bereits sehr alte Vorschlag kann zur Entwicklung von Sicherheitsmerkmalen bei mit Aufzeichnungsschichten versehenen modernen Aufzeichnungsmaterialien keinen Beitrag leisten.

Die **FR 2 365 656 A** betrifft ein Sicherheitspapier, das insbesondere als Wertpapier und für offizielle Dokumente gedacht ist und gegen Fälschungen insbesondere von Unterschriften mittels Tintenlöschern dadurch geschützt werden soll, dass Reaktivsubstanzen, wie Phthaleine, u.a. Phenolphthalein und Thymolphthalein als Massezusatz oder Oberflächenauftrag dem Papier bzw. dem Papierfaserstoff zugefügt werden. Durch pH-Wertveränderung infolge der für Fälschungsversuche eingesetzten Tintenlöscher kommt es zu einer Farbreaktion der zunächst nicht sichtbaren Reaktivsubstanzen und der Fälschungsversuch wird erkennbar. Hinsichtlich eines temporär wirkenden Sicherheitsmerkmals für heutzutage übliche Aufzeichnungsmaterialien mit speziellen Aufzeichnungsschichten findet sich in der Schrift keine Offenbarung.

Aus der **AU-B-23045/84** ist ein Aufzeichnungsmaterial mit einem auf seine Oberfläche aus mindestens zwei, vorzugsweise jedoch drei, den Grundfarben weitestgehend entsprechenden unsichtbaren Tinten aufgedruckten Bild bekannt, das mit alkalischer Entwicklerlösung zu einem sichtbaren farbigen Bild entwickelt werden soll. Als Komponenten der zunächst unsichtbaren Tinten werden u.a. p- nitrophenol, 2 bis [ (4 hydroxyphenyl) methyl] benzolsäure und 3,3 bis [4 hydroxy 2 methyl 5 (1 methylethyl) phenol] offenbart. Das bekannte Aufzeichnungsmaterial soll als Lernmaterial einsetzbar sein, wobei die entwickelten Bilder mit einer die erzeugte Farbe wieder auslöschenden und ggf. mit der Entwicklerlösung vermischten Verbindung zu behandeln sind. Eine Lehre zur Entwicklung eines temporären Sicherheitsmerkmals bei einem mit speziellen Funktionsschichten für den Tintenstrahldruck oder die wärmeempfindliche Aufzeichnung versehenen Aufzeichnungsmaterial ist aus diesem älteren Stand der Technik nicht abzuleiten.

Aus dem der **JP 61280986 A** entsprechenden Patent Abstract of Japan ist ein älterer Typ eines als wärmeempfindlich bezeichneten Aufzeichnungsmaterials bekannt, bei dem zunächst keine sichtbare Aufzeichnung entsteht. Mittels Tiefdruck wird eine Phenolphthalein als Farbbildner enthaltende Druckfarbe auf die Oberfläche eines Papiers aufgedruckt, wobei eine zunächst unsichtbare Aufzeichnung entsteht. Die bedruckte Papieroberfläche wird anschließend mit einer dicken Wachsschicht abgedeckt. Die infolge des angewendeten Tiefdruckverfahrens tiefer liegenden Stellen eines wärmeempfindlichen Teils haben bei Wärmeeinwirkung die gleiche Färbung wie die anderen Stellen und sind daher für das menschliche Auge unsichtbar. Da durch Auftrag von verdünnter Natronlauge nur die vertieft liegenden Stellen sichtbar werden, während nicht vertieft liegende, mit Wachs beschichtete Stellen von der Natronlauge nicht erreicht werden, bleiben die Schriftzeichen hier unsichtbar. Ein Nachteil dieses Vorschlags liegt in dem folienartigen und papierunähnlichen Oberflächencharakter dieses Aufzeichnungsmaterials. Ein weiterer Nachteil ist die infolge der Wachsbeschichtung nicht beschreibbare Oberfläche.

Der Patent Abstract entsprechend der **JP 61283593 A** offenbart eine über einer elektrisch leitfähigen Schicht aufgetragene farbentwickelnde Schicht gleicher Farbtönung, bei der die Farbbildung mittels eines nicht näher-genannten pH-Indikators durch pH-Wert-Einstellung erfolgt, um auf diese Weise das in der elektrisch leitenden Schicht erzeugte, zunächst aber unsichtbare Schriftbild sichtbar zu machen.

Alle vorstehend aufgeführten aktiven Untersuchungsmethoden haben gemeinsam, daß die zum Zweck des Authentizitätsnachweises für Dokumente herbeigeführten, visuell erkennbaren chemischen Reaktionen irreversibel sind, womit diese Nachweismethoden auf Anwendungen beschränkt bleiben müssen, die eine Weiter- bzw. Wiederverwendung der untersuchten Dokumente in ihrer ursprünglichen Form nicht erfordern.

Als ein authentizitätsnachweisendes Sicherheitsmerkmal offenbart die **EP 0 327 788 A 2** Druckfarben mit reversiblen fotochromen Bestandteilen, die bei Tageslicht kaum sichtbar sind und unter dem Einfluß anregender Strahlung wie beispielsweise ultraviolettem Licht eine möglichst gut sichtbare und schnelle Farbwechselreaktion zeigen. Als Expositionsdauer werden Zeiträume von ca. 5 Minuten angegeben, während die erzielte Farbreaktion zwischen wenigen Pikosekunden und bis zu 30 Minuten sichtbar bleiben.

Ein frontseitig gemäß verschiedener Ausführungsformen unterschiedliche Beschichtungen aufweisender Aufzeichnungsbogen wird in der **JP 09 131965 A** vorgeschlagen. Zur Ausbildung eines Sicherheitsmerkmals ist der Aufzeichnungsbogen rückseitig mit einer druckempfindlichen SC (self-colouring)- Schicht beaufschlagt, in der Akzeptoren und Mikrokapseln mit darin eingekapselten Farbbildnern vorliegen und wobei die Akzeptoren mit den Farbbildnern auf Druck eine farbbildende Reaktion eingehen. Um das so gebildete Sicherheitselement reversibel auszugestalten, ist die SC-Schicht mit einer Entfärbungsschicht unterlegt, die die auf Druck gebildete Farbe nach wenigen Minuten auf chemischen Wege wieder verschwinden läßt.

Für ein wärmeempfindliches Aufzeichnungsmaterial schlägt die **DE 43 31 260 C 2** eine rückseitige Erkennungsschicht vor, die als farbreaktive Komponente im ersten Fall ausschließlich einen aus wärme- und druckempfindlichen Aufzeichnungsschichten bekannten, Elektronen abgebenden Farbbildner oder im zweiten Fall ausschließlich einen aus solchen Aufzeichnungsschichten bekannten, sauer reagierenden, Elektronen annehmenden Farbentwickler aufweist. Im Rahmen eines Authentizitätsnachweises wird die Aufzeichnungsschicht mit einem Reagenz beträufelt, das als farbreaktive Komponente im ersten Fall einen mit dem Farbbildner der Erkennungsschicht reagierenden Farbentwickler bzw. im zweiten Fall einen mit dem Farbentwickler der Erkennungsschicht reagierenden Farbbildner enthält.

Die vorstehend aufgeführten Methoden der aktiven, reversiblen Authentizitätsprüfung weisen alle den Nachteil eines komplizierten Aufbaus der die Prüfung ermöglichenden Aufzeichnungsmaterialien auf, bei denen allesamt eine eigens für die authentizitätsnachweisenden Sicherheitsmerkmale geschaffene Beschichtung bzw. Spezialbedruckung erforderlich ist. Gleichzeitig schränken diese Beschichtungen bzw. Bedruckungen die Anwendungsmöglichkeiten der Aufzeichnungsmaterialien unnötig ein.

Die vorliegende Erfindung sieht eine erste ihrer Aufgaben darin, Aufzeichnungsmaterialien mit einem neuen, authentizitätsnachweisenden Sicherheitsmerkmal zur Verfügung zu stellen, das eine schnelle Ansprechzeit mit einer variabel handhabbaren Reversibilität im Rahmen des Authentizitätsnachweises verbindet und weitestgehend keine einschränkenden Auswirkungen auf den Aufbau der das Sicherheitsmerkmal aufweisenden Aufzeichnungsmaterialien hat.

Die Lösung der vorstehend ausgeführten Aufgaben gelingt mit einem Aufzeichnungsmaterial mit einer auf seiner Oberfläche zugänglichen Substanz, die mindestens ein substituiertes Phthalid enthält und die bei Kontakt mit einem alkalisch eingestellten und mindestens ein flüchtiges Lösungsmittel enthaltenden Entwicklerreagenz unter Farbbildung reagiert, wobei
a) das Aufzeichnungsmaterial ein aus einem Substrat und einer oder mehreren auf das Substrat aufgebrachten Beschichtung(en) bestehendes für das Tintenstrahldruckverfahren vorgesehenes Aufzeichnungsmaterial ist, das mindestens auf einer seiner Seiten eine zur Aufnahme der Aufzeichnung vorgesehene Empfangsschicht für das Tintenstrahldruckverfahren umfasst oder
b) ein wärmeempfindliches Aufzeichnungsmaterial ist, das auf mindestens einer seiner Seiten eine zur Aufnahme der Aufzeichnung vorgesehene wärmeempfindliche Aufzeichnungsschicht aufweist, die unter der Einwirkung von Wärme miteinander reagierende Farbbildner und organische Akzeptoren enthält, oder
c) ein Aufzeichnungsmaterial ist, das auf der zur Aufnahme der Aufzeichnung vorgesehenen Seite eine druckempfindliche SC (self-colouring)- Aufzeichnungsschicht aufweist und
d) die Substanz als temporär wirkendes, authentizitätsnachweisendes Sicherheitsmerkmal in der obersten auf mindestens eine Seite des Aufzeichnungsmaterials aufgebrachten Beschichtung oder
e) in einer aufgebrachten Bedruckung oder
f) in dem auf eine seiner Seiten nicht beschichteten Substrat vorhanden ist oder
g) mittels einer Präparation auf eine nicht beschichtete Substratoberfläche aufgetragen ist.

Dabei sind unter substituierten Phthaliden im Sinne der vorliegenden Erfindung in einem pH-Bereich kleiner 7 farblose substituierte Lactone der 2-(hydroxymethyl)-benzoesäure sowie in einem pH-Bereich kleiner 7 farblose substituierte Sulfonphthaleine zu verstehen, bei denen die Wasserstoffatome der Methylengruppe durch aliphatische und/oder aromatische Reste ersetzt sind.

Die der Erfindung zugrundeliegende farbbildende Reaktion mindestens eines substituierten Phthalids, wobei das α-Naphtolsulfonphthalein sowie das o-Kresolphthalein und ganz besonders das 5'5"-Diisopropyl 2'2"dimethyl-phenolphthalein ― kurz: Thymolphthalein - oder das 3,3-Bis(4-hydroxyphenyl)-phthalid - kurz: Phenolphthalein ― bevorzugt sind, mit einer alkalisch eingestellten Lösung, wobei eine Lauge und ganz besonders eine NaOH-Lösung bevorzugt sind, findet innerhalb eng begrenzter alkalischer pH-Bereiche statt. So liegt beispielsweise für die Farbreaktion von Thymolphthalein mit einer NaOH-Lösung dieser pH-Bereich zwischen 9,3 und 10,5. Für die Reaktion von Phenolphthalein mit einer NaOH-Lösung liegt dieser pH-Bereich zwischen 8,4 und 10 (und entsprechend: pH-Bereich_{α-Naphtolsulfonphthalein} = 7,4 - 8,7; pH-Bereich_{o-Kresolphthalein} = 8,2 - 9,8).
Werden Thymolphthalein und Phenolphthalein gleichzeitig als Substanz benutzt und ist deren gleichzeitige farbbildende Reaktion mit einer NaOH-Lösung als Entwicklerreagenz gewünscht, liegt der einzustellende pH-Wert zwischen 9,3 und 10; bei einem pH-Wert zwischen 8,4 und 9,3 erfolgt nur eine farbbildende Reaktion des Phenolphthalein mit der NaOH-Lösung.

Die als Entwicklerreagenzien verwendeten alkalisch eingestellten Lösungen weisen eine pH-Wert erhöhende Wirkung für die Umgebung auf, in der die farbbildende Reaktion der Entwicklerreagenzien mit den als Substanz benutzten substituierten Phthaliden herbeigeführt werden soll. Dabei ist der pH-Wert dieser alkalischen Lösungen mindestens so hoch einzustellen wie der Minimalwert des die entsprechende farbbildende Reaktion ermöglichenden pH-Bereichs. Wird beispielsweise als Substanz Thymolphthalein verwendet, muß der pH-Wert des aufzubringenden Entwicklerreagenz größer als 9,3 sein, wird Phenolphthalein als Substanz verwendet, liegt der Minmal-pH-Wert bei 8,4. Je geringer der pH-Wert der ein substituiertes Phthalid als Substanz beinhaltenden Umgebung ist, um so höher ist der pH-Wert der Entwicklerreagenz zu wählen.

Zur Ausbildung der Reversibilität des Sicherheitsmerkmals in den erfindungsgemäßen Aufzeichnungsmaterialien ist es erforderlich, daß das oder daß die flüchtige(n) Lösungsmittel in den als Entwicklerreagenzien genutzten alkalisch eingestellten Lösungen in der Lage ist bzw. sind, bei Zimmertemperatur mit der Zeit wieder zu verdunsten. In Versuchen mit den besonders geeigneten NaOH-Lösungen zeigten sich dabei technischer Ethanol und bevorzugt Wasser, in denen NaOH in Lösung geht, als besonders tauglich, die Reversibilität herzustellen, während sich das Glycerin als ungeeignet herausstellte.
Mit der Verdunstung der flüchtigen Lösungsmittel aus dem Entwicklerreagenz verschwindet auch die Farbe wieder, die durch den Auftrag des Entwicklerreagenz auf die die Substanz aufweisende Druckfarbe oder Oberfläche des auf Authentizität zu untersuchenden Aufzeichnungsmaterials entstanden war.
Durch Variation der Konzentration der Substanz sowie der Konzentration und Zusammensetzung des verwendeten Entwicklerreagenz läßt sich die Intensität und die zeitliche Dauer der farbbildenden Reaktion in einem bevorzugten Bereich zwischen wenigen Sekunden und länger als einer Stunde verändern.
So werden beispielsweise bei Verwendung von Thymolphthalein oder Phenolphthalein als Substanz in auf das Substrat von Aufzeichnungsmaterialien aufgebrachten Beschichtungen gute Ergebnisse erzielt, wenn Einsatzmengen zwischen 0,005 und 1 Gew.-% (otro), bezogen auf die auf das Substrat aufgebrachte und getrocknete, die Substanz enthaltende Beschichtung, eingestellt werden. Die Obergrenze wird hauptsächlich aus wirtschaftlichen Überlegungen beschränkt. Ferner bestehen bei erhöhter Konzentration Löslichkeitsschwierigkeiten unter anderem der beiden oben aufgeführten Substanzen während der Verarbeitungsphase und die zeitliche Dauer der Farbreaktionen wird unpraktikabel verlängert. (otro = ofentrockene Gewichtsanteile)

Das Verfahren zur Authentizitätsprüfung eines erfindungsgemäßen Aufzeichnungsmaterials sieht vor, daß die die Substanz aufweisende Oberfläche des Aufzeichnungsmaterials mit einer alkalischen Lösung, bevorzugt mit einer NaOH-Lösung, als Entwicklerreagenz benetzt wird. Dabei hat es sich bewährt, daß die Benetzung mittels eines Teststiftes, Schwammes oder Stempels erfolgt.

Die erfindungsgemäßen Aufzeichnungsmaterialien weisen auf mindestens einer ihrer nicht beschichteten Substratoberflächen bzw. in einer obersten auf mindestens einer ihrer Seiten aufgebrachten Beschichtung oder Bedruckung als Substanz mindestens ein substituiertes Phthalid auf, wobei die Substanz bei Benetzung der die Substanz aufweisenden Seite der Aufzeichnungsmaterialien mit dem Entwicklerreagenz durch eine mit der Zeit wieder verschwindende, farbbildende Reaktion mit dem Entwicklerreagenz sichtbar zu machen ist. Sofern auf mindestens einer nicht beschichteten Substratoberfläche die Substanz zwecks Authentizitätsnachweises für das Entwicklerreagenz zugänglich ist, wird die Substanz in die Substratmasse oder in eine gegebenenfalls auf mindestens eine Substratoberfläche aufgebrachte Präparation eingetragen.

In einer ersten Variante des erfindungsgemäßen Aufzeichnungsmaterials ist dieses ein für das Tintenstrahldruckverfahren vorgesehenes Aufzeichnungsmaterial, das mindestens auf einer seiner Seiten eine zur Aufnahme der Aufzeichnung vorgesehene Empfangsschicht für das Tintenstrahldruckverfahren aufweist.

Eine zweite Variante sieht vor, daß das Aufzeichnungsmaterial zumindest auf seiner zur Aufnahme der Aufzeichnung vorgesehenen Seite eine wärmeempfindliche Aufzeichnungsschicht aufweist. Es ist bevorzugt, daß dabei zwischen Substrat und wärmeempfindlicher Aufzeichnungsschicht eine pigmentierte Zwischenschicht eingetragen ist. Eine ganz bevorzugte Ausführungsform sieht ein solches wärmeempfindliches Aufzeichnungsmaterial mit einer auf die wärmeempfindliche Aufzeichnungsschicht aufgetragenen Schutzschicht vor.

Als dritte Variante wird ein Aufzeichnungsmaterial mit temporär wirkendem, authentizitätsnachweisendem Sicherheitsmerkmal vorgeschlagen, das auf der zur Aufnahme der Aufzeichnung vorgesehenen Seite eine druckempfindliche SC (self-colouring)- Aufzeichnungsschicht aufweist. Solche SC-Aufzeichnungsschichten weisen neben anderen Zuschlagstoffen insbesondere Akzeptoren und Mikrokapseln mit darin eingekapselten Farbbildnern auf, wobei die Farbbildner mit den Akzeptoren auf Druck eine farbbildende Reaktion eingehen.

Insbesondere wird bevorzugt, daß das Substrat der erfindungsgemäßen Aufzeichnungsmaterialien aus Papier besteht, wobei jedoch auch andere Substrate wie verschiedene Folien oder Kunststoffkarten wie auch Karton und Pappe oder beschichtete Metallbleche möglich sind.

In den erfindungsgemäßen Aufzeichnungsmaterialien ist das neue, temporär wirkende, authentizitätsnachweisende Sicherheitsmerkmal mit anderen bereits bekannten Sicherheitsmerkmalen, wie zum Beispiel mit den im einführenden, den Stand der Technik betreffenden Teil dieser Schrift erwähnten Sicherheitsmerkmalen in geeigneter Weise kombinierbar.

Folgende Beispiele werden die Erfindung weitergehend verdeutlichen:

### Herstellung einer wärmeempfindlichen Papierbahn:

Auf einer Langsieb-Papiermäschine wird eine Trägerbahn aus gebleichten und gemahlenen Laub- und Nadelholzzellstoffen unter Zugabe üblicher Beischlagstoffe in üblichen Mengen mit einer flächenbezogenen Masse von 162 g/m² hergestellt. Frontseitig wird eine pigmentierte Zwischenschicht von 8 g/m² aufgebracht, rückseitig wird das Trägerpapier mit einer Stärkepräparation von 0,3 g/m² versehen.

Zur Herstellung einer wärmeempfindlichen Papierbahn wird in einer separaten Streichmaschine auf die Zwischenschicht des vorstehend in seiner Herstellung beschriebenen Trägerpapiers eine wärmeempfindliche Aufzeichnungsschicht, die neben den unter Einwirkung von Wärme miteinander reagierenden Farbbildnern und organischen Farbakzeptoren weitere übliche Zuschlagstoffe für wärmeempfindliche Aufzeichnungsschichten wie unter anderem Harze, Wachse und Stabilisatoren enthält, von 5,4 g/m² aufgetragen.

### Beispiel 1:

Zur Ausbildung einer, eine Authentizitätsprüfung ermöglichenden Schutzschicht wird eine schwach pigmentierte Beschichtungsmasse auf einen pH-Wert von 8 eingestellt. Als Substanz wird Thymolphthalein (5'5"-Diisopropyl-2'2"dimethylphenolphthalein), das zum Zweck seiner gleichmäßigen Verteilung in der Beschichtungsmasse in Ethanol gelöst ist, unter Rühren der Beschichtungsmasse zugegeben, bis eine Zuschlagmenge von 0,012 Gew.-% (otro), bezogen auf die getrocknete Beschichtungsmasse (otro), erreicht ist. Die so hergestellte Beschichtungsmasse wird als Schutzschicht mit 3,5 g/m² auf die wärmeempfindliche Aufzeichnungsschicht der vorstehend der Beispielsbeschreibung in ihrer Herstellung beschrieben Papierbahn aufgetragen.

### Beispiel 2:

Die entsprechend Beispiel 1 hergestellte, schwach pigmentierte und auf einen pH-Wert von 8 eingestellte Beschichtungsmasse wird mit in Ethanol gelöstem Thymolphthalein versehen, so daß sich eine Zuschlagmenge von 0,023 Gew.-% (otro), bezogen auf die getrocknete Beschichtungsmasse (otro), ergibt. Anschließend wird diese Beschichtungsmasse entsprechend Beispiel 1 als Schutzschicht mit 3,5 g/m² auf die wärmeempfindliche Aufzeichnungsschicht der in seiner Herstellung eingangs der Beispielsbeschreibung vor Beispiel 1 beschriebenen Papierbahn aufgetragen.

### Beispiel 3:

Entsprechend Beispiel 1 wird eine weitere Beschichtungsmasse hergestellt, die im Unterschied zu dem vorgenannten Beispiel 1 einen Thymolphthalein-Zuschlag von 0,06 Gew.-% (otro), bezogen auf die getrocknete Beschichtungsmasse (otro), aufweist. Anschließend wird diese Beschichtungsmasse entsprechend dem vorgenannten Beispiel 1 auf die wärmeempfindliche Aufzeichnungsschicht der in ihrer Herstellung eingangs der Beispielsbeschreibung vor Beispiel 1 beschriebenen Papierbahn aufgetragen.

### Beispiel 4:

Eine weitere Beschichtungsmasse wird entsprechend Beispiel 1 hergestellt und als Schutzschicht auf die wärmeempfindliche Aufzeichnungsschicht der in ihrer Herstellung eingangs der Beispielsbeschreibung vor Beispiel 1 beschriebenen Papierbahn aufgetragen, wobei die Beschichtungsmasse im Unterschied zu dem vorgenannten Beispiel 1 einen Thymolphthalein-Zuschlag von 0,119 Gew.-% (otro), bezogen auf die getrocknete Beschichtungsmasse (otro), aufweist.

### Beispiel 5:

Eine weitere Papierbahn entsprechend der eingangs der Beispielsbeschreibung vor Beispiel 1 erfolgten Herstellung wird mit einer flächenbezogenen Masse von 43,5 g/m² zuzüglich 8 g/m² frontseitig aufgebrachter pigmentierte Zwischenschicht und 0,3 g/m² rückseitig aufgebrachter Stärkepräparation hergestellt.

In eine wärmeempfindliche Beschichtungsmasse, die neben den unter Einwirkung von Wärme miteinander reagierenden Farbbildnern und organischen Farbakzeptoren weitere übliche Zuschlagstoffe für wärmeempfindliche Beschichtungsmassen wie unter anderem Harze, Wachse und Stabilisatoren enthält, wird unter Rühren in Ethanol gelöstes Thymolphthalein zugegeben, bis eine Zuschlagmenge von 0,1 Gew.-% (otro), bezogen auf die getrocknete Beschichtungsmasse (otro), erreicht ist. Die so hergestellte Beschichtungsmasse wird als wärmeempfindliche Aufzeichnungsschicht mit 3,5 g/m² auf die Zwischenschicht aufgetragen.

### Herstellung von Markierungsstiften

Zur Durchführung verschiedener Authentizitätsprüfungen werden als Entwicklerreagenzien NaOH-Lösungen auf Wasserbasis in unterschiedlichen Konzentrationen (0,5%; 1%; 2%; 3%; 4%; 5%) hergestellt. Die Lösungen werden anschließend auf die Tampons von an sonst gleichen Filzschreibern aufgezogen, die sodann entsprechend beschriftet und für die weiteren Untersuchungsarbeiten genutzt werden können.

Nachfolgende Tabelle 1 zeigt die Ergebnisse, die sich bei Benetzung der entsprechend der Beispiele 1 bis 5 hergestellten erfindungsgemäßen Aufzeichnungspapiere mit wässerigen NaOH-Lösungen unterschiedlicher Konzentration, aufgetragen mittels der in ihrer Herstellung vorstehend beschriebenen Markierungsstifte, ergeben. Es werden die Stärke der sich ergebenden farbbildenden Reaktionen sowie deren zeitliche Dauer, beginnend mit dem Auftragen der NaOH-Lösungen bis zu dem vollständigen Verschwinden der gebildeten Farbe, angegeben:

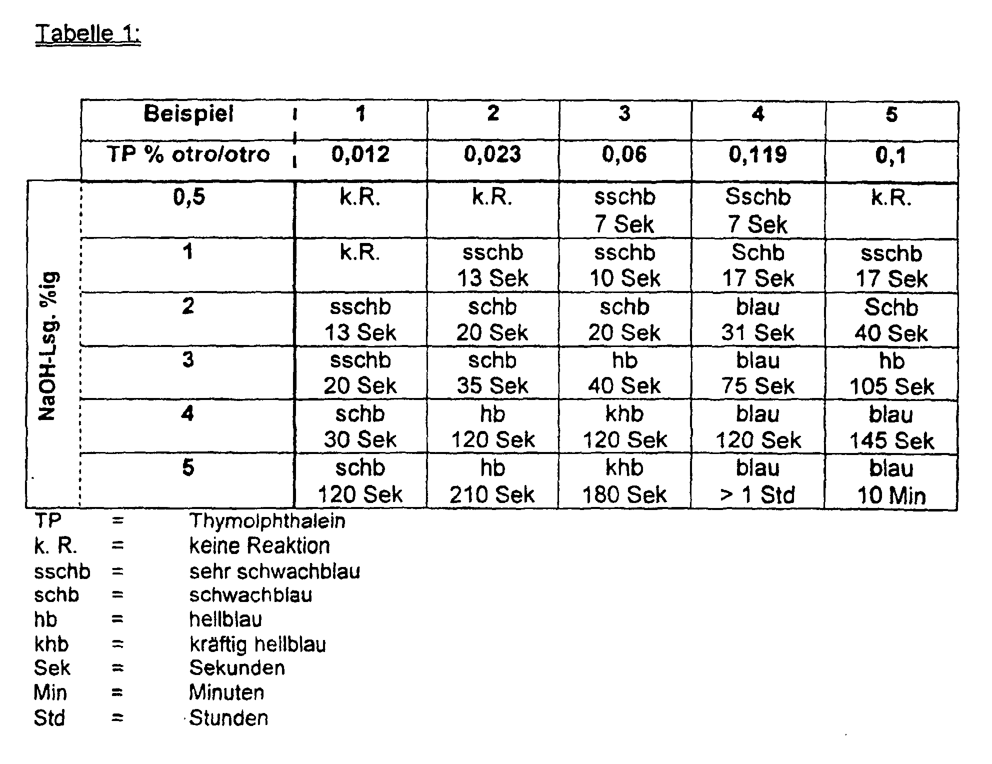

### Beispiel 6:

Zur Ausbildung eines, eine Authentizitätsprüfung ermöglichenden Sicherheitsmerkmals wird eine schwach pigmentierte Beschichtungsmasse auf einen pH-Wert von 8 eingestellt.

Als Substanz wird Phenolphthalein (3,3-Bis(4-hydroxyphenyl)-phthalid), das zum Zweck seiner gleichmäßigen Verteilung in der Beschichtungsmasse in Ethanol gelöst ist, unter Rühren der Beschichtungsmasse zugegeben, bis eine Zuschlagmenge von 0,01 Gew.-% (otro), bezogen auf die getrocknete Beschichtungsmasse (otro), erreicht ist. Die so hergestellte Beschichtungsmasse wird als Schutzschicht mit 3,3 g/m² auf die wärmeempfindliche Aufzeichnungsschicht der in ihrer Herstellung eingangs der Beispielsbeschreibung vor Beispiel 1 beschriebenen Papierbahn aufgetragen.

### Beispiel 7:

Die entsprechend Beispiel 6 hergestellte, schwach pigmentierte und auf einen pH-Wert von 8 eingestellte Beschichtungsmasse wird mit in Ethanol gelöstem Phenolphthalein versehen, so daß sich eine Zuschlagmenge von 0,03 Gew.-% (otro), bezogen auf die getrocknete Beschichtungsmasse (otro), ergibt. Anschließend wird diese Beschichtungsmasse entsprechend Beispiel 6 als Schutzschicht mit 3,3 g/m² auf die wärmeempfindliche Aufzeichnungsschicht der in ihrer Herstellung eingangs der Beispielsbeschreibung vor Beispiel 1 beschriebenen Papierbahn aufgetragen.

### Beispiel 8:

Entsprechend Beispiel 6 wird eine weitere Beschichtungsmasse hergestellt, die im Unterschied zu dem vorgenannten Beispiel 6 einen Phenolphthalein-Zuschlag von 0,06 Gew.-% (otro), bezogen auf die getrocknete Beschichtungsmasse (otro), aufweist. Anschließend wird diese Beschichtungsmasse entsprechend dem vorgenannten Beispiel 6 auf die wärmeempfindliche Aufzeichnungsschicht der in ihrer Herstellung eingangs der Beispielsbeschreibung vor Beispiel 1 beschriebenen Papierbahn aufgetragen.

### Beispiel 9:

Eine weitere Beschichtungsmasse wird entsprechend Beispiel 6 hergestellt und als Schutzschicht auf die wärmeempfindliche Aufzeichnungsschicht der in ihrer Herstellung eingangs der Beispielsbeschreibung vor Beispiel 1 beschriebenen Papierbahn aufgetragen, wobei die Beschichtungsmasse im Unterschied zu dem vorgenannten Beispiel 6 einen Phenolphthalein-Zuschlag von 0,1 Gew.-% (otro), bezogen auf die getrocknete Beschichtungsmasse (otro), aufweist.

Nachfolgende Tabelle 2 zeigt die Ergebnisse, die sich bei Benetzung der entsprechend der Beispiele 6 bis 9 hergestellten erfindungsgemäßen Aufzeichnungspapiere mit wässerigen NaOH-Lösungen unterschiedlicher Konzentration, aufgetragen mittels der in ihrer Herstellung in Anschluß an Beispiel 5 beschriebenen Markierungsstifte, ergeben. Es werden die Stärke der sich ergebenden farbbildenden Reaktionen sowie deren zeitliche Dauer, beginnend mit dem Auftragen der NaOH-Lösungen bis zu dem vollständigen Verschwinden der gebildeten Farbe, angegeben:

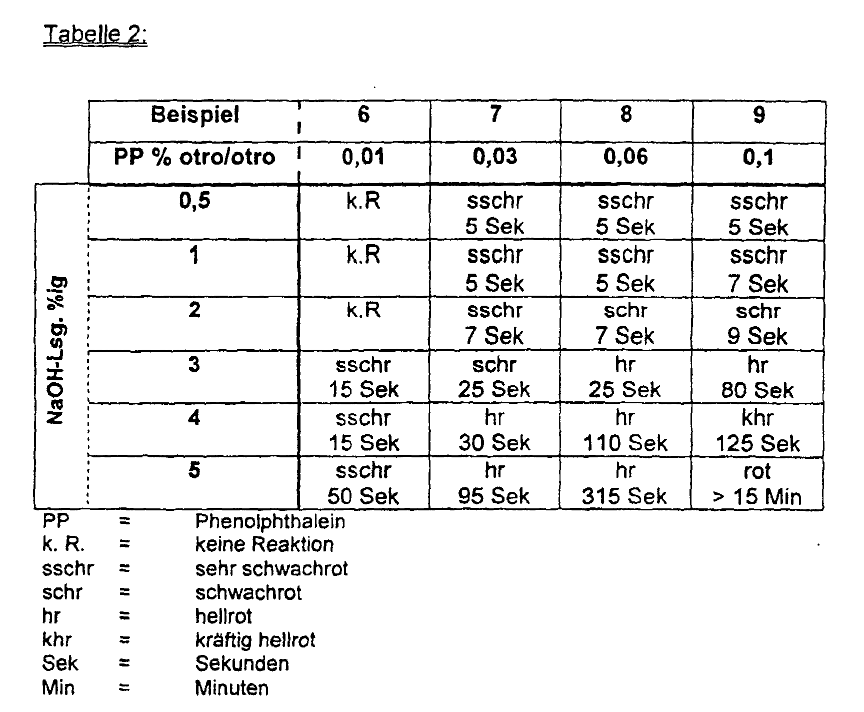

### Herstellung einer neutralen Papierbahn:

Entsprechend den unter Beispiel 5, Absatz 1, beschriebenen Prozessen wird auf der Papiermaschine eine Trägerbahn aus gebleichten und gemahlenen Laub- und Nadelholzzellstoffen unter Zugabe von üblicher Beischlagstoffen in üblichen Mengen mit einer flächenbezogenen Masse in diesem Fall von 76,5 g/m² hergestellt. Frontseitig wird eine pigmentierte Zwischenschicht von 0,2 g/m² aufgebracht, rückseitig wird das Trägerpapier mit einer Stärkepräparation von 0,3 g/m² versehen.

### Beispiel 10:

Auf die pigmentierte Zwischenschicht gemäß vorstehender Ausführungen wird eine für .das Tintenstrahldruckverfahren vorgesehene Aufzeichnungsschicht mit 11,5 g/m² aufgebracht. Die zuvor dafür hergestellte Beschichtungsmasse weist bei einem eingestellten pH-Wert von 6,7 neben einem Siliziumoxid als Pigment, einem Polyvinylalkohol als Bindemittel und einem Farb-Fixiermittel weitere übliche Zuschlagstoffe auf. Ferner beinhaltet die Beschichtungsmasse 0,128 Gew.-% (otro), bezogen auf die getrocknete Beschichtungsmasse (otro), zuvor in einer 25 %-tigen NaOH-Lösung gelöstes und unter ständigem Rühren eingebrachtes Thymolphthalein als Substanz.

### Beispiel 11:

Entsprechend Beispiel 10 wird eine weitere Beschichtungsmasse zur Ausbildung einer Tintenempfangsschicht hergestellt, die im Unterschied zur Beschichtungsmasse aus Beispiel 10 als Substanz 0,117 Gew.-% (otro), bezogen auf die getrocknete Beschichtungsmasse (otro), Phenolphthalein, das zwecks gleichmäßiger Verteilung in der Beschichtungsmasse zuvor in einer 25 %-tigen NaOH-Lösung gelöst wurde, enthält. Erneut beträgt der pH-Wert der benutzten Beschichtungsmasse 6,7. Die Beschichtungsmasse wird anschließend mit 11,5 g/m² auf die pigmentierte Zwischenschicht der in ihrer Herstellung vor Beispiel 10 beschriebenen Papierbahn aufgetragen.

Nachfolgende Tabelle 3 zeigt die Ergebnisse, die sich bei Benetzung der entsprechend der Beispiele 10 und 11 hergestellten erfindungsgemäßen Aufzeichnungspapiere mit wässerigen NaOH-Lösungen unterschiedlicher Konzentration, aufgetragen mittels der in ihrer Herstellung in Anschluß an Beispiel 5 beschriebenen Markierungsstifte, ergeben. Es werden die Stärke der sich ergebenden farbbildenden Reaktionen sowie deren zeitliche Dauer, beginnend mit dem Auftragen der NaOH-Lösungen bis zu dem vollständigen Verschwinden der gebildeten Farbe, angegeben:

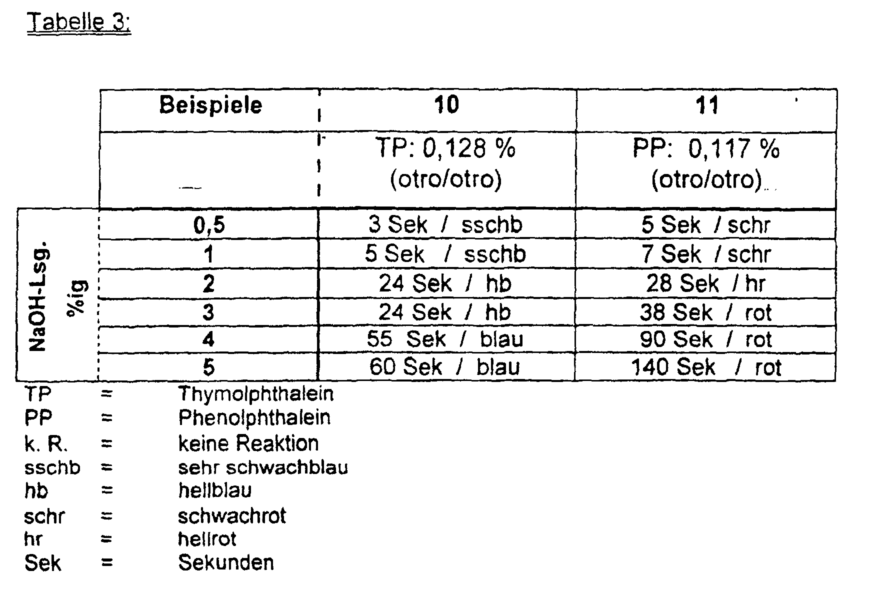

Wie die Beispiele in Kombination mit den einzelnen Tabellen verdeutlichen, erfüllt die Erfindung in ihren zahlreichen Ausführungsformen die gestellten Aufgaben überzeugend, in dem ein temporär wirkendes, authentizitätsnachweisendes Sicherheitsmerkmal mit schneller Ansprechzeit und variabel handhabbarer Reversibilität für Aufzeichnungsmaterialien zur Verfügung gestellt wird, wobei das Sicherheitsmerkmal weitestgehend keine einschränkende Auswirkung auf den Aufbau der das Sicherheitsmerkmal aufweisenden Aufzeichnungsmaterialien hat.
Ferner werden für das Sicherheitsmerkmal aufweisende Aufzeichnungsmaterialien einfache und preiswerte Methoden zur Authentizitätsprüfung vorgestellt und in ihrem Einsatz beschrieben.

## Patentansprüche

1. Aufzeichnungsmaterial mit einer auf seiner Oberfläche zugänglichen Substanz, die mindestens ein substituiertes Phthalid enthält und die bei Kontakt mit einem alkalisch eingestellten und mindestens ein flüchtiges Lösungsmittel enthaltenden Entwicklerreagenz unter Farbbildung reagiert, **dadurch gekennzeichnet, daß**
a) das Aufzeichnungsmaterial ein aus einem Substrat und einer oder mehreren auf das Substrat aufgebrachten Beschichtung(en) bestehendes für das Tintenstrahldruckverfahren vorgesehenes Aufzeichnungsmaterial ist, das mindestens auf einer seiner Seiten eine zur Aufnahme der Aufzeichnung vorgesehene Empfangsschicht für das Tintenstrahldruckverfahren umfasst oder
b) ein wärmeempfindliches Aufzeichnungsmaterial ist, das auf mindestens einer seiner Seiten eine zur Aufnahme der Aufzeichnung vorgesehene wärmeempfindliche Aufzeichnungsschicht aufweist, die unter der Einwirkung von Wärme miteinander reagierende Farbbildner und organische Akzeptoren enthält, oder
c) ein Aufzeichnungsmaterial ist, das auf der zur Aufnahme der Aufzeichnung vorgesehenen Seite eine druckempfindliche SC (self-colouring)- Aufzeichnungsschicht aufweist und
d) die Substanz als temporär wirkendes, authentizitätsnachweisendes Sicherheitsmerkmal in der obersten auf mindestens eine Seite des Aufzeichnungsmaterials aufgebrachten Beschichtung oder
e) in einer aufgebrachten Bedruckung oder
f) in dem auf eine seiner Seiten nicht beschichteten Substrat vorhanden ist oder
g) mittels einer Präparation auf eine nicht beschichtete Substratoberfläche aufgetragen ist.

2. Aufzeichnungsmaterial nach Anspruch 1, **dadurch gekennzeichnet, daß** das Aufzeichnungsmaterial zwischen Substrat und wärmeempfindlicher Aufzeichnungsschicht eine pigmentierte Zwischenschicht aufweist.

3. Aufzeichnungsmaterial nach einem der Ansprüche 1 oder 2, **dadurch gekennzeichnet, daß** auf die wärmeempfindliche Aufzeichnungsschicht eine Schutzschicht aufgebracht ist.

4. Aufzeichnungsmaterial nach einem der Ansprüche 1 bis 3, **dadurch gekennzeichnet, daß** das Aufzeichnungsmaterial ein Substrat aus Papier aufweist.

5. Aufzeichnungsmaterial nach einem der Ansprüche 1 bis 4, **dadurch gekennzeichnet, daß** die Substanz mindestens eine der beiden folgenden Komponenten umfaßt
■ 5'5"-Diisopropyl-2'2"dimethylphenolphthalein
■ 3,3-Bis(4-hydroxyphenyl)-phthalid

## Claims

1. Recording material, having a substance which is accessible on its surface and which comprises at least one substituted phthalide and reacts, with colour formation, on contact with a developer reagent that has been adjusted to be alkaline and that comprises at least one volatile solvent, **characterised in that**
a) the recording material consists of a substrate and of one or more coating(s) applied to the substrate, and is intended for the inkjet printing method, having, on at least one of its sides, a receiving layer for the inkjet printing method which is intended for receiving the recording or
b) is a heat-sensitive recording material having, on at least one of its sides, a heat-sensitive recording layer intended for receiving the recording, which recording layer comprises colour-formers and organic acceptors that react with one another under the influence of heat or
c) is a recording material having, on the side intended for receiving the recording, a pressure-sensitive SC (self-colouring) recording layer, and
d) the substance is present as a temporarily acting, authenticity-demonstrating security feature in the uppermost coating applied to at least one side of the recording material or
e) in an applied printing or
f) in the substrate which is not coated on one of its sides, or
g) is applied, by means of a preparation, to an uncoated substrate surface.

2. Recording material according to claim 1, **characterised in that** the recording material has a pigmented intermediate layer between the substrate and heat-sensitive recording layer.

3. Recording material according to one of claims 1 or 2, **characterised in that** a protective layer is applied on top of the heat-sensitive recording layer.

4. Recording material according to one of claims 1 to 3, **characterised in that** the recording material comprises a substrate made from paper.

5. Recording material according to one of claims 1 to 4, **characterised in that** the substance comprises at least one of the following two components:
■ 5',5"-diisopropyl-2',2"-dimethylphenolphthalein
■ 3,3-bis(4-hydroxyphenyl)-phthalide.

## Revendications

1. Matériau d'enregistrement ayant une substance accessible sur sa surface, qui contient au moins un phtalide substitué et qui, par contact avec un révélateur alcalinisé et contenant au moins un solvant volatil, réagit en formant une couleur, **caractérisé en ce que** :
a) le matériau d'enregistrement est un matériau d'enregistrement prévu pour le procédé d'impression à jet d'encre, qui est constitué d'un support et d'un ou plusieurs revêtements appliqués sur le support et qui comprend au moins sur l'un de ses côtés, une couche réceptrice prévue pour recevoir l'enregistrement, pour le procédé d'impression à jet d'encre, ou bien
b) le matériau d'enregistrement est un matériau d'enregistrement thermosensible qui présente sur au moins l'un de ses côtés, une couche d'enregistrement thermosensible, prévue pour recevoir l'enregistrement, qui contient des agents de formation de couleur et des accepteurs organiques, qui réagissent ensemble sous l'effet de la chaleur, ou bien
c) le matériau d'enregistrement est un matériau d'enregistrement qui présente sur le côté prévu pour recevoir l'enregistrement, une couche d'enregistrement SC (autocolorante), sensible à la pression, et
d) la substance jouant le rôle de marque de sécurité prouvant l'authenticité, à action temporaire, est présente dans le revêtement supérieur, appliqué sur au moins un côté du matériau d'enregistrement, ou
e) dans une impression appliquée, ou
f) dans le support non-revêtu sur l'un de ses côtés, ou bien
g) elle est appliquée au moyen d'une préparation sur une surface du support non-revêtue.

2. Matériau d'enregistrement selon la revendication 1, **caractérisé en ce qu'**il présente entre le support et la couche d'enregistrement thermosensible, une couche intermédiaire pigmentée.

3. Matériau d'enregistrement selon la revendication 1 ou 2, **caractérisé en ce qu'**une couche de protection est appliquée sur la couche d'enregistrement thermosensible.

4. Matériau d'enregistrement selon l'une quelconque des revendications 1 à 3, **caractérisé en ce qu'**il présente un support en papier.

5. Matériau d'enregistrement selon l'une quelconque des revendications 1 à 4, **caractérisé en ce que** la substance comprend au moins l'un des deux constituants suivants :
la 5',5''-diisopropyl-2',2''-diméthylphénolphtaléine,
le 3,3-bis(4-hydroxyphényl)-phtalide.
